(19) Europäisches Patentamt

European Patent Office

Office européen des brevets

(11) EP 1 600 792 A2

(12) EUROPEAN PATENT APPLICATION

(43) Date of publication:
30.11.2005 Bulletin 2005/48

(51) Int Cl.⁷: **G01S 11/10**

(21) Application number: 05011629.2

(22) Date of filing: 30.05.2005

(84) Designated Contracting States:
**AT BE BG CH CY CZ DE DK EE ES FI FR GB GR HU IE IS IT LI LT LU MC NL PL PT RO SE SI SK TR**
Designated Extension States:
**AL BA HR LV MK YU**

(30) Priority: **29.05.2004 KR 2004038662**

(71) Applicants:
• **SAMSUNG ELECTRONICS CO., LTD.**
**Suwon-city, Gyeonggi-do (KR)**
• **Yonsei University**
**Seoul (KR)**

(72) Inventors:
• **Park, Goo-Hyun**
**Seodaemun-gu Seoul (KR)**

• **Lee, Ye-Hoon**
**Yeongtong-dong Suwon-si Gyeonggi-do (KR)**
• **Kim, Eung-Sun**
**Yeongtong-dong Suwon-si Gyeonggi-do (KR)**
• **Lee, Jong-Hyeuk**
**Yeongtong-dong Suwon-si Gyeonggi-do (KR)**
• **Kim, Ho-Jin**
**Yeongtong-dong Suwon-si Gyeonggi-do (KR)**
• **Hong, Dae-Sik**
**Seodaemun-gu Seoul (KR)**

(74) Representative: **Grünecker, Kinkeldey,**
**Stockmair & Schwanhäusser Anwaltssozietät**
**Maximilianstrasse 58**
**80538 München (DE)**

(54) **Velocity estimation apparatus and method**

(57) A velocity estimation apparatus and method for a communication system including a transmitter for transmitting signals through wireless channels and a receiver for receiving the signals and restoring data. The apparatus includes a pilot signal detector for detecting a pilot signal from a received signal, a maximum Doppler frequency estimator for estimating a maximum Doppler frequency using the pilot signal detected by the pilot signal detector, and an adaptive type band-limit filter having a limit band based on a previous output value of the maximum Doppler frequency estimator. By using the pilot signal, which is removed with noise, while passing through the band-limit filter, it is possible to precisely estimate a maximum Doppler frequency, and thereby estimate the velocity.

FIG.2

**EP 1 600 792 A2**

**Description**

The present invention relates to a mobile communication system, and more particularly to a technique for estimating a velocity of a moving object in a mobile communication system.

In next-generation wireless communication, because it is necessary to support large multimedia packet data services using limited frequency resources, allocation of system resources based on precise channel information is regarded as an important factor. Accordingly, the velocity of a mobile terminal is an essential element of channel information for allocation of system resources, and specifically, is utilized to determine coefficients such as a channel tracking length, a size of an interleaver, etc., in a receiving scheme utilizing an adaptive type algorithm. Moreover, velocity information of a moving object is important information for power control and hand-off control in a cellular communication system.

In a mobile terminal, received signals experience a fading phenomenon and a Doppler frequency shift phenomenon. Generally, in a mobile communication system, instantaneous signal power received by an antenna of a receiver corresponds to the sum of signals received through a multitude of paths generated by scattering and reflecting signals transmitted from a transmitter to the receiver. A received signal can be divided into a slow fading signal component and a fast fading signal component. The slow fading component is affected by the topography between the transmitter and the receiver, and received power varies depending upon the measuring place. The fast fading component is also called Rayleigh fading and is affected by scattering and reflection of signals due to the presence of obstacles on a transmission path, such as buildings, trees, automobiles, etc. Therefore, the power of a signal received by the mobile terminal instantaneously changes under the influence of the slow fading and fast fading.

As described above, in a mobile terminal (receiver), received signals experience a Doppler frequency shift phenomenon. The Doppler frequency shift phenomenon produces a frequency error in a received signal in proportion to a velocity of the mobile terminal relative to a base station (transmitter).

In this connection, by using a characteristic in which a frequency error produced in a received signal by the Doppler frequency shift phenomenon is proportional to a moving velocity of the mobile terminal, it is possible to estimate a velocity of the mobile terminal. Therefore, in a mobile communication system, the velocity of a mobile terminal can be estimated by detecting a maximum Doppler frequency of a signal received from a base station.

Research regarding the estimation of a maximum Doppler frequency for measurement of a channel coefficient has been conducted for a long time. Through this research, Doppler frequency estimation algorithms using a zero-crossing-rate (ZCR), a level-crossing-rate (LCR), an auto-correlation function (ACF), or a covariance (COV) of a received signal are disclosed in the prior art.

In the conventional maximum Doppler frequency estimation technique based on the ZCR or LCR, because the influence by additional noise is not considered, when estimating a maximum Doppler frequency in a fading channel including noise, distortion occurs to a great extent.

In the conventional maximum Doppler frequency estimation technique based on the ACF, a signal to noise ratio (SNR) is used to compensate estimated distortion occurring in a fading channel. However, because it is difficult to precisely estimate the signal to noise ratio in the mobile communication circumstances, which change fast, the technique cannot be embodied in a reliable manner.

However, in Rician fading circumstances in which direct waves exist, the conventional maximum Doppler frequency estimation technique based on the COV exhibits stronger characteristics than those of the conventional maximum Doppler frequency estimation technique based on the ACF. Nevertheless, the conventional maximum Doppler frequency estimation technique based on the COV suffers from defects in that distortion also occurs to a great extent in a fading channel including noise, and it is necessary to precisely determine an SNR to compensate the distortion.

To cope with the above-mentioned problems, a technique for estimating a maximum Doppler frequency using a value of the filtered auto-correlation function (ACF) has been suggested in the art. By using this technique, while it is possible to reduce the distortion occurring because of additional noise, signal distortion due to filtering increases in high maximum Doppler frequency circumstances. Also, because the technique using the filtered auto-correlation function does not perfectly eliminate but only relieves the influence of noise, distortion still occurs in circumstances having a very low signal to noise ratio.

In a variation of the technique for estimating a maximum Doppler frequency using a value of the filtered auto-correlation function (ACF), a ratio of values of auto-correlation functions of signals having a time difference is used. In this case, while it is possible to estimate a maximum Doppler frequency without being influenced by noise, a drawback is caused in that a range of maximum Doppler frequency that can be estimated is reduced to a half, and because auto-correlation functions are basically used, performance characteristics are feeble in the Rician fading circumstances in which direct waves exist.

Accordingly, the present invention has been designed to solve the above and other problems occurring in the prior art

**EP 1 600 792 A2**

It is the object of the present invention to a provide velocity estimation apparatus and method for estimating a maximum Doppler frequency in a mobile communication system, which can efficiently estimate a maximum Doppler frequency without being influenced by noise and without experiencing reduction in a range of estimation.

This object is solved by the subject matter of the independent claims.

Preferred embodiments are defined in the dependent claims.

An aspect of the present invention is to provide a velocity estimation apparatus and method for a mobile communication system, which reliably estimates a maximum Doppler frequency in Rayleigh fading circumstances and Rician fading circumstances.

In order to achieve the above, according to one aspect of the present invention, there is provided a velocity estimation apparatus for a communication system including a transmitter for transmitting signals through wireless channels and a receiver for receiving the signals and restoring data. The apparatus includes: a pilot signal detector for detecting a pilot signal from a received signal; a maximum Doppler frequency estimator for estimating a maximum Doppler frequency using the pilot signal detected by the pilot signal detector; and an adaptive type band-limit filter located at an input end of the maximum Doppler frequency estimator and established with a limit band in conformity with a previous output value of the maximum Doppler frequency estimator.

According to another aspect of the present invention, there is provided a velocity estimation apparatus for a mobile communication system including at least one base station for providing mobile stations within a service area with wireless access services. The apparatus includes: an RF processing unit for down-converting a received wireless signal into a baseband signal; a sampling unit for sampling a predetermined section of the baseband signal output from the RF processing unit and outputting a digital signal; a pilot signal detection unit for detecting a pilot signal from the digital signal output from the sampling unit; an adaptive type band-limit unit for passing only the pilot signal among signals output from the pilot signal detection unit; a maximum Doppler frequency estimation unit for estimating a maximum Doppler frequency using the pilot signal filtered by the adaptive type band-limit unit; and a velocity information generating unit for converting a maximum Doppler frequency value estimated by the maximum Doppler frequency estimation unit into velocity information.

According to still another aspect of the present invention, there is provided a velocity estimation method for a communication system including a transmitter for transmitting signals through wireless channels and a receiver for receiving the signals and restoring data. The method includes the steps of: detecting a pilot signal from a received signal; conducting a band-limit filtering task for the pilot signal; estimating a maximum Doppler frequency using the band-limit filtered pilot signal; and generating velocity information using the estimated maximum Doppler frequency.

According to yet still another aspect of the present invention, there is provided a velocity estimation method for a mobile communication system including at least one base station for providing mobile stations within a service area with wireless access services. The method includes the steps of: down-converting a received wireless signal into a baseband signal; sampling a predetermined section of the baseband signal and outputting a digital signal; detecting a pilot signal from the digital signal; conducting a band-limit filtering task for the pilot signal; estimating a maximum Doppler frequency using the band-limit filtered pilot signal; and converting the estimated maximum Doppler frequency into velocity information.

The above object and other aspects, features, and advantages of the present invention will be more apparent from the following detailed description when taken in conjunction with the accompanying drawings, in which:

FIG 1A is a graph illustrating maximum Doppler frequency distortion by additional noise when using maximum Doppler frequency estimation techniques based on the ZCR and LCR;

FIG. 1B is a graph illustrating maximum Doppler frequency distortion by additional noise when using maximum Doppler frequency estimation techniques based on the ACF and COV;

FIG 2 is a block diagram illustrating a velocity estimation apparatus in accordance with an embodiment of the present invention;

FIG 3A is a graph illustrating a power spectrum of a received pilot signal before passing through an adaptive type band-limit filter according to the present invention;

FIG. 3B is a graph illustrating a power spectrum of the received pilot signal after passing through the adaptive type band-limit filter according to the present invention;

FIG. 4A is a graph illustrating results of experiments for comparing performances of the present maximum Doppler frequency estimation technique and the conventional maximum Doppler frequency estimation technique based on the ZCR;

FIG 4B is a graph illustrating results of experiments for comparing performances of the present maximum Doppler frequency estimation technique and the conventional maximum Doppler frequency estimation technique based on the LCR;

FIG 4C is a graph illustrating results of experiments for comparing performances of the present maximum Doppler frequency estimation technique and the conventional maximum Doppler frequency estimation technique based on the ACF; and
FIG. 4D is a graph illustrating results of experiments for comparing performances of the present maximum Doppler frequency estimation technique and the conventional maximum Doppler frequency estimation technique based on the COV.

Preferred embodiments of the present invention will be described in detail herein below with reference to the accompanying drawings. In the following description, the same elements will be designated by the same reference numerals although they are shown in different drawings. Further, various specific definitions found in the following description, such as specific values of packet identifications, contents of displayed information, etc., are provided only to help general understanding of the present invention, and it is apparent to those skilled in the art that the present invention can be implemented without such definitions.

Further, in the following description of the present invention, a detailed description of known functions and configurations incorporated herein will be omitted when it may obscure the subject matter of the present invention.

When not considering additional noise, the aforementioned maximum Doppler frequency estimation techniques based on the ZCR, LCR, ACF, and COV can be expressed as in Equations (1) through (4), respectively.

$$Z_R = \sqrt{2}f_m \tag{1}$$

$$L_R = \sqrt{2\pi}f_m\rho e^{-\rho^2} \tag{2}$$

$$\frac{\phi_1}{\phi_0} = J_0(2\pi f_m T_S) \tag{3}$$

$$\frac{Cov[a^2(i)a^2(i+1)]}{Var[a^2(i)]} = J_0^2 (2\pi f_m T_S) \tag{4}$$

In Equations (1) and (2), $Z_R$ and $L_R$ are values of the zero crossing rate (ZCR) and level crossing rate (LCR) of a received signal, and $f_m$ is a maximum Doppler frequency.

In Equation 2, $\rho$ is a ratio between a reference level R for counting the number of level crossing generations and an average receipt level Rrms.

In Equations 3 and 4, $T_s$ is a period of a pilot signal.

In Equation 3, $\phi_k$ is a value of the self-correlation function (ACF) between received signals, which are separated by a $k^{th}$ sampling time.

In Equation 4, $a(i)$ is a size of an $i^{th}$ received signal, and $Cov$ [] and $Var$[ ] are values of covariance and self-variance.

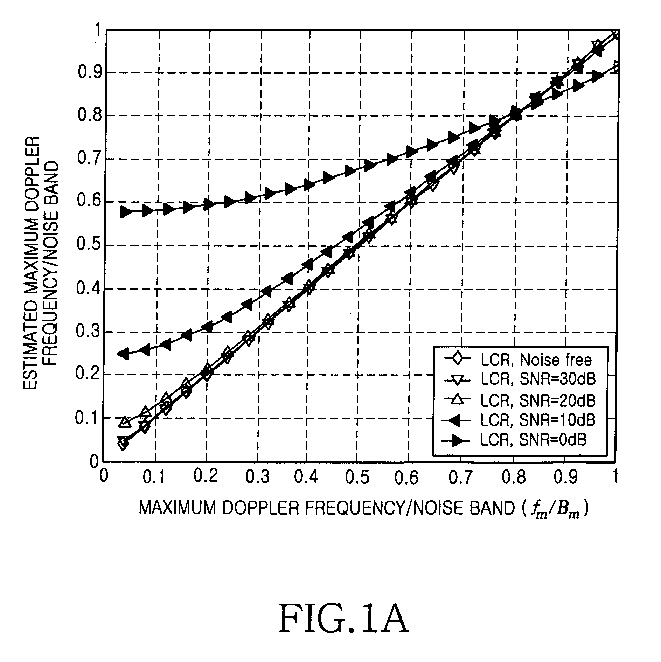

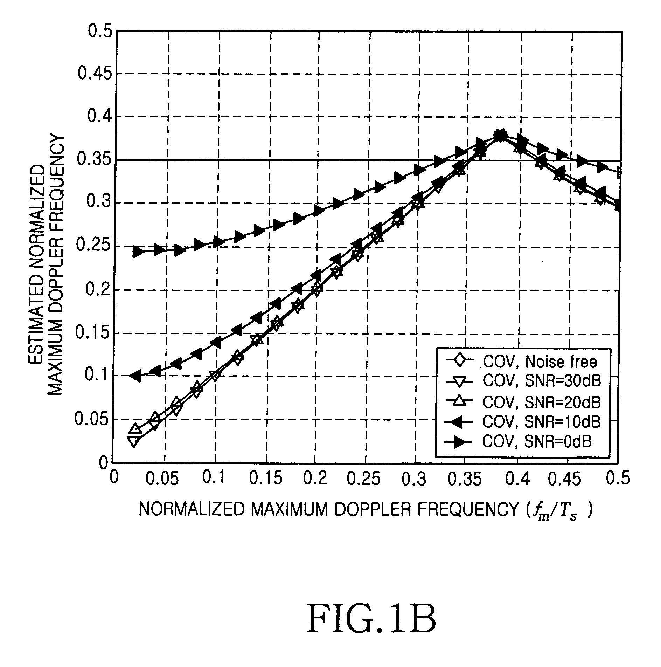

FIGs. 1A and 1B are graphs illustrating maximum Doppler frequency distortion by additional noise when using the maximum Doppler frequency estimation techniques based on the ZCR, LCR, ACF, and COV. Referring to FIGs. 1A and 1 B, it is to be readily understood that, in all of the maximum Doppler frequency estimation techniques based on the ZCR, LCR, ACF, and COV, estimated maximum Doppler frequencies are seriously distorted in circumstances having low signal to noise ratios, when compared to actual maximum Doppler frequencies.

By reconstructing Equations (1) through (4) in consideration of influence by additional noise, Equations (5) through (8) are obtained.

$$Z_R = \frac{\gamma+1}{\gamma+2B_m^2/3f_m^2} \sqrt{2}f_m \tag{5}$$

$$L_R = \sqrt{\frac{\gamma+1}{\gamma+2B_m^2/3f_m^2}} \sqrt{2\pi}f_m\rho e^{-\rho^2} \tag{6}$$

EP 1 600 792 A2

$$\frac{\phi_1}{\phi_0} = \left(\frac{\gamma}{\gamma+1}\right)\left(J_0(2\pi f_m T_S) + \frac{\sin c(B_m T_S)}{\gamma}\right) \qquad \dots (7)$$

$$\frac{Cov[a^2(i)a^2(i+1)]}{Var[a^2(i)]} = \left(\frac{\gamma}{\gamma+1}\right)^2 \left(J_0(2\pi f_m T_S) + \frac{\sin c(B_m T_S)}{\gamma}\right)^2 \qquad (8)$$

In Equations (5) through (8), $\gamma$ is a signal to noise ratio (SNR) and $B_m$ is a bandwidth of additional noise. Accordingly, in order to precisely estimate a maximum Doppler frequency in channel circumstances including noise, information for the signal to noise ratio $\gamma$ is required.

However, because it is difficult to precisely estimate information regarding the signal to noise ratio in mobile communication circumstances, which change fast, it is common that a maximum Doppler frequency is estimated using Equations (1) through (4), which do not consider influence by noise. Therefore, serious distortion occurs in an estimated value of the maximum Doppler frequency, by additional noise.

In the present invention, an adaptive band-limiting task is implemented by limiting the bandwidth $B_m$ of additional noise to

$$\sqrt{\frac{3}{2}}$$

times the maximum Doppler frequency $f_m$, being a bandwidth of a pilot signal passing through a fading channel, thereby preventing distortion that otherwise occurs in the conventional maximum Doppler frequency estimation techniques based on the ZCR, LCR, ACF, and COV.

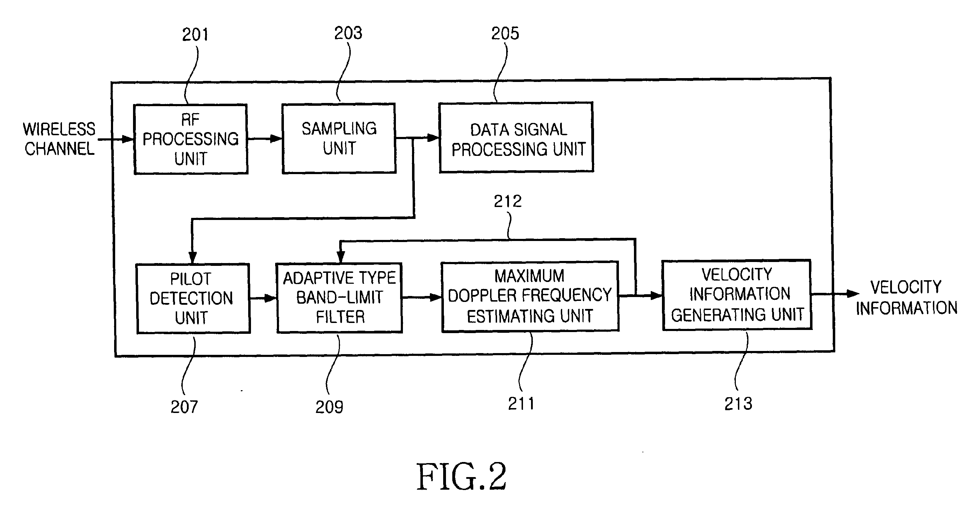

FIG. 2 is a block diagram illustrating a velocity estimation apparatus in accordance with an embodiment of the present invention. Referring to FIG. 2, the velocity estimation apparatus includes an RF processing unit 201 for filtering a signal of a specific band among signals received by an antenna (not shown) and down-converting the filtered signal into a baseband signal, a sampling unit 203 for sampling a predetermined section of the baseband signal output from the RF processing unit 201 and outputting a digital signal, a data signal processing unit 205 for restoring the digital signal output from the sampling unit 203 into transmission data, a pilot signal detection unit 207 for detecting a pilot signal from the digital signal output from the sampling unit 203, an adaptive type band-limit filter 209 for passing only the pilot signal among signals output by the pilot signal detection unit 207, a maximum Doppler frequency estimation unit 211 for estimating a maximum Doppler frequency using the pilot signal passing through the adaptive type band-limit filter 209, and a velocity information generating unit 213 for converting an estimated value of maximum Doppler frequency output by the maximum Doppler frequency estimation unit 211 into velocity information and outputting converted velocity information.

A pass band of the adaptive type band-limit filter 209 is determined by a previous estimation value of maximum Doppler frequency estimated by the maximum Doppler frequency estimation unit 211, and an output of the maximum Doppler frequency estimation unit 211 is provided to the adaptive type band-limit filter 209 through a separate feedback line 212.

The maximum Doppler frequency estimation unit 211 estimates a maximum Doppler frequency using the aforementioned technique based on the ZCR, LCR, ACF, or COV.

As described above, because the estimated maximum Doppler frequency is proportional to a velocity of a moving object, it is possible to obtain the velocity information in a simple manner.

The pilot signal detected by the pilot signal detection unit 207 is input to the maximum Doppler frequency estimation unit 211 through the adaptive type band-limit filter 209, which is established with the pass band in consideration of the previous estimation value of maximum Doppler frequency estimated by the maximum Doppler frequency estimation unit 211.

The maximum Doppler frequency estimation unit 211 estimates a maximum Doppler frequency based on the ZCR, LCR, ACF, or COV of a received signal and outputs an estimated value of maximum Doppler frequency.

In this preferred embodiment of the present invention, the adaptive band-limiting task is implemented by limiting the bandwidth $B_m$ of additional noise to

$$\sqrt{\frac{3}{2}}$$

times the maximum Doppler frequency $f_m$, which is a bandwidth of a pilot signal passing through a fading channel, thereby preventing the distortion that otherwise occurs in the conventional maximum Doppler frequency estimation techniques based on the ZCR, LCR, ACF, and COV.

An immediately previously estimated value of maximum Doppler frequency is used as an estimated value of maximum Doppler frequency for adaptive type band-limiting. Because a maximum Doppler frequency changes only in conformity with a change in velocity of a moving object, the maximum Doppler frequency changes very slowly. Therefore, by using the previously estimated value of maximum Doppler frequency, the likelihood of an error to be produced can be decreased.

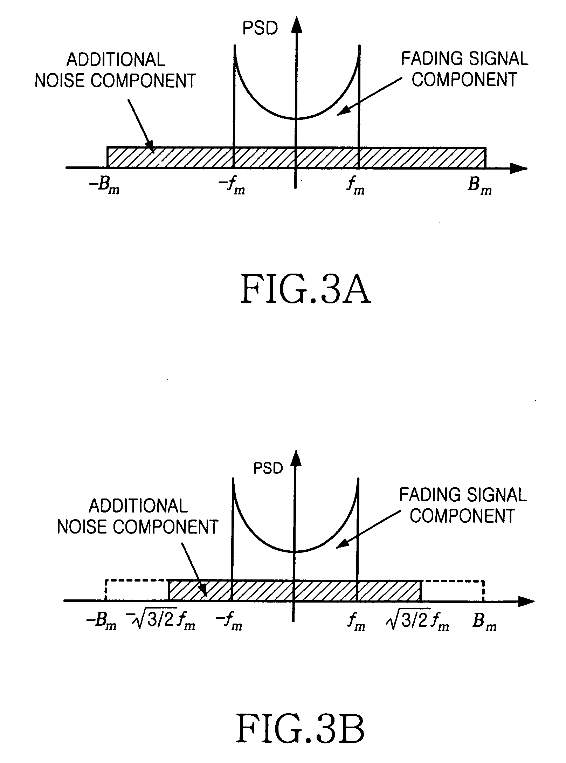

FIGs. 3A and 3B are graphs illustrating power spectrums of the received pilot signal before and after passing through the adaptive type band-limit filter according to the present invention. When comparing FIG. 3B with FIG. 3A, it is to be noted that the pilot signal having passed through the adaptive type band-limit filter 209 is band-limited only at a noise band, and therefore, distortion does not occur in the pilot signal. Accordingly, because the noise band is adaptively band-limited, the ZCR and LCR of the received signal can be expressed by Equations (1) and (2), and the ACF and COV of the received signal can be expressed as shown in Equations (9) and (10), respectively.

$$\frac{\phi_1}{\phi_0} \approx J_0(2\pi f_m T_S) \qquad (9)$$

$$\frac{Cov[a^2(i)a^2(i+1)]}{Var[a^2(i)]} \approx J_0^{\,2}(2\pi f_m T_S) \qquad (10)$$

Equations (9) and (10) are obtained using an approximate expressions, $J_0(x) \approx 1 - x^2/4$ and $\mathrm{sinc}(x) \approx 1 - (2\pi x)^2/6$.

As can be readily seen from Equations (1), (2), (9), and (10), because a characteristic of a signal having passed through the adaptive type band-limit filter corresponds to a received signal having no additional noise, even when using the maximum Doppler frequency estimation techniques based on the ZCR, LCR, ACF, and COV, distortion does not occur.

In the velocity estimation method according to the present invention, because a decision feedback structure is utilized, it is necessary to verify the stability.

In the adaptive type band-limit scheme using the decision feedback structure, because its own output information is used to limit a band of an input signal, there is a possibility of the decision feedback structure not to converge, i.e., diverge. Therefore, it is very important to verify converging performance of the decision feedback structure.

In the decision feedback structure, when assuming that $f_m$ is a maximum Doppler frequency, $\hat{f}_m(n)$ is an $n^{th}$ estimated maximum Doppler frequency, and $\alpha(n)$ is a ratios of an $n^{th}$ estimated error. The $n^{th}$ estimated maximum Doppler frequency $\hat{f}_m(n)$ can be calculated by Equation (11).

$$\hat{f}_m(n) = \alpha(n) \cdot f_m \qquad (11)$$

By applying the adaptive type band-limit scheme to Equations (5) through (8), a relationship between $\alpha(n)$ and $\alpha(n-1)$ can be expressed as shown in Equation (12).

$$\alpha(n) = \sqrt{\frac{\gamma + \alpha^2(n-1)}{\gamma + 1}} \qquad (12)$$

When assuming that an initial estimated error ratio is $\alpha(0)$, $\alpha(0)$ becomes a variable for indicating an error of an initial maximum Doppler frequency estimation value, and has a range of $0 < \alpha(0) < \infty$.

By rearranging Equation (12) in the form of a general term using a principle of geometric series, Equation (13) is obtained.

$$\alpha(n)= \sqrt{1+\frac{\alpha^2(0)-1}{(\gamma+1)^n}} \qquad (13)$$

In Equation (13), because $\gamma$ represents a signal to noise ratio after implementing the decision feedback adaptive type band limiting task, an inequality $\gamma > 0$ is always satisfied. Therefore, it is to be understood that $\alpha(n)$ converges to 1 in an $n^{th}$ condition. That is, in the suggested decision feedback structure, if $\alpha(n)=1$, because an $n^{th}$ estimated maximum Doppler frequency satisfies an equality $f_m(n)=f_m$, it is to be readily understood that the $n^{th}$ estimated maximum Doppler frequency always converges precisely to the maximum Doppler frequency of the decision feedback structure.

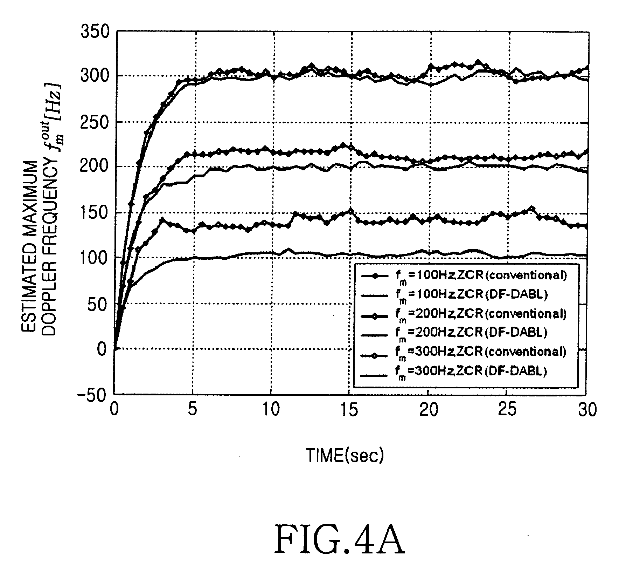

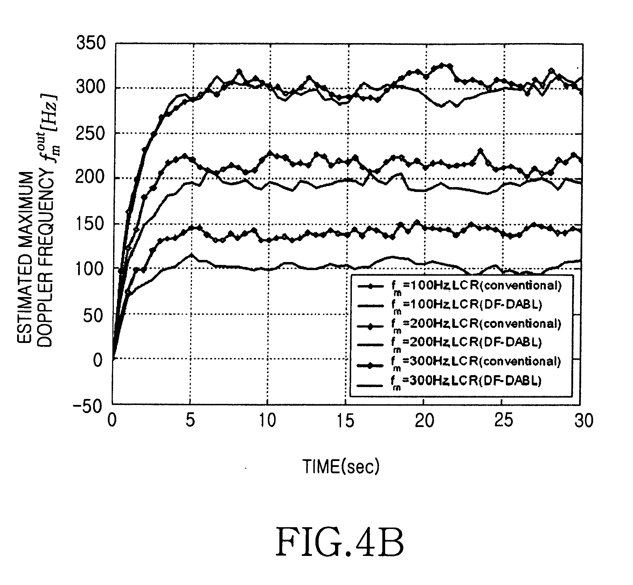

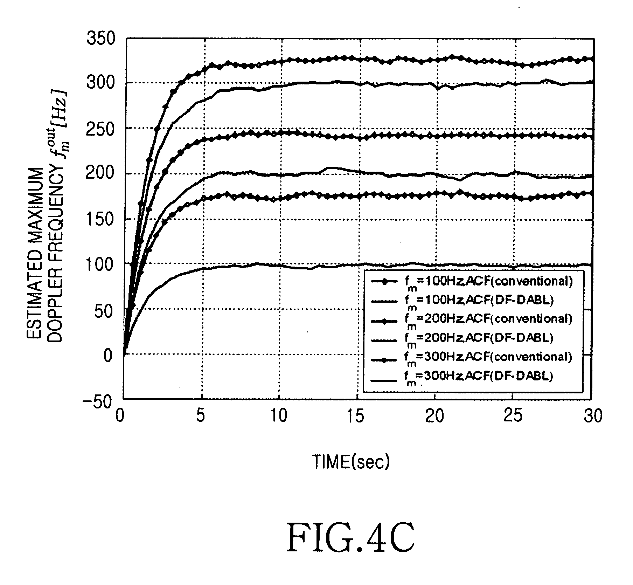

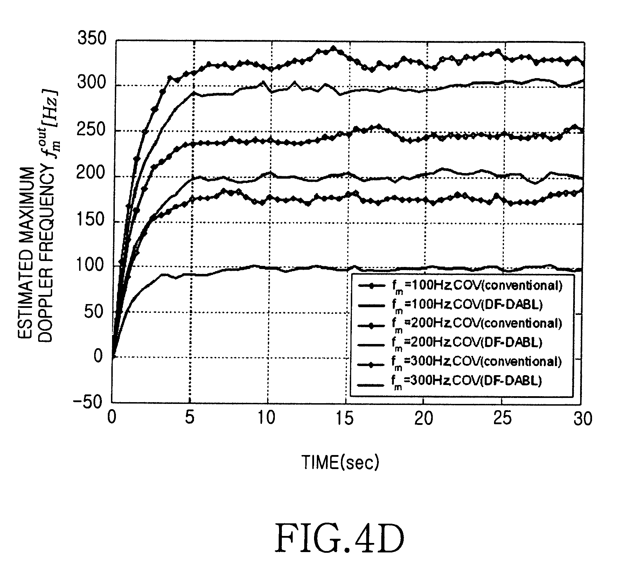

FIGs. 4A through 4D are graphs illustrating results of experiments for comparing performances of the present maximum Doppler frequency estimation technique and the conventional maximum Doppler frequency estimation techniques based on the ZCR, LCR, ACF, and COV.

In order to experiment performances of the maximum Doppler frequency estimation techniques, a carrier frequency of 2GHz, which is used in the WCDMA communication system, and a pilot symbol transmission rate of 1.5 Kbaud, which corresponds to a slot transmission rate of the 3GPP standard, were used. Also, the signal to noise ratio was set to 10dB to consider the influence by noise, pilot symbols received for 500msec were used to estimate a single maximum Doppler frequency, and an estimated maximum Doppler frequency was updated by a learning rate of 0.3.

Referring to FIGs. 4A through 4D, in the conventional maximum Doppler frequency estimation techniques based on the ZCR, LCR, ACF, and COV, distortion occurs in an estimated maximum Doppler frequency value, because of additional noise. More specifically, serious distortion occurs in a small maximum Doppler frequency. However, when applying the maximum Doppler frequency estimation technique according to the present invention, an estimated maximum Doppler frequency value is not influenced by additional noise, regardless of an actual maximum Doppler frequency.

As is apparent from the above descriptions, in the velocity estimation apparatus and method according to the present invention, when estimating a maximum Doppler frequency, because influence of noise is minimized by limiting a band of a pilot signal using an immediately prior maximum Doppler frequency estimation value, it is possible to precisely estimate a maximum Doppler frequency and thereby obtain reliable velocity information.

Also, in the velocity estimation apparatus and method according to the present invention, because the fact that a previously estimated maximum Doppler frequency is used to newly estimate a maximum Doppler frequency, outside information such as an SNR in the conventional art is not needed. As a result, the complexity in constructing the apparatus and implementing the method can be significantly reduced.

Further, in the velocity estimation apparatus and method according to the present invention, because an SNR, which changes fast, is not used and instead, a maximum Doppler frequency, which changes gradually only in conformity with a change in velocity of a moving object, is used, a stable performance characteristic is accomplished.

Moreover, in the velocity estimation apparatus and method according to the present invention, by implementing a band-limit filtering task for a received pilot signal, estimated distortion can be minimized even in circumstances having a low signal to noise ratio.

Furthermore, in the velocity estimation apparatus and method according to the present invention, the techniques based on the ZCR, LCR, ACF, and COV, which are used in the conventional maximum Doppler frequency estimation can be utilized in an efficient manner.

While the present invention has been shown and described with reference to certain preferred embodiments thereof, it will be understood by those skilled in the art that various changes in form and details may be made therein without departing from the scope of the present invention as defined by the appended claims.

## Claims

1. A velocity estimation apparatus for a communication system including a transmitter for transmitting a signal through at least one wireless channel and a receiver for receiving the signal and restoring data, the apparatus comprising:

   a pilot signal detector for detecting a pilot signal;
   a maximum Doppler frequency estimator for estimating a maximum Doppler frequency using the pilot signal detected by the pilot signal detector; and
   an adaptive type band-limit filter for limiting a band in conformity with a previous output value of the maximum Doppler frequency estimator.

2. The apparatus as claimed in claim 1, further comprising:

a velocity information generator for converting the maximum Doppler frequency estimated by the maximum Doppler frequency estimator into velocity information.

3. The apparatus as claimed in claim 1 or 2, wherein the estimated maximum Doppler frequency is fed back to the adaptive type band-limit filter through a separate feedback line.

4. The apparatus as claimed in one of claims 1 to 3, wherein the adaptive type band-limit filter is established with a limit band corresponding to

$$\sqrt{\frac{3}{2}}$$

times a previously estimated maximum Doppler frequency.

5. The apparatus as claimed in one of claims 1 to 4, wherein the maximum Doppler frequency estimator uses at least one of a zero-crossing-rate, ZCR, a level-crossing-rate, LCR, an auto-correlation function, ACF, and a covariance, COV, of a received signal, for estimating the maximum Doppler frequency.

6. A velocity estimation apparatus for a mobile communication system including at least one base station for providing at least one mobile station within a service area with wireless access services, the apparatus comprising:

   an RF processing unit for down-converting a received wireless signal into a baseband signal;
   a sampling unit for sampling a predetermined section of the baseband signal output from the RF processing unit and outputting a digital signal corresponding to the sampled section;
   a pilot signal detection unit for detecting a pilot signal from the digital signal output from the sampling unit;
   an adaptive type band-limit unit for passing only the pilot signal among signals output from the pilot signal detection unit;
   a maximum Doppler frequency estimation unit for estimating a maximum Doppler frequency using the pilot signal filtered by the adaptive type band-limit unit; and
   a velocity information generating unit for converting a maximum Doppler frequency value estimated by the maximum Doppler frequency estimation unit into velocity information.

7. The apparatus as claimed in claim 6, wherein the band-limit unit is adaptively established with a limit band based on a previous estimation value of maximum Doppler frequency estimated by the maximum Doppler frequency estimation unit.

8. The apparatus as claimed in claim 7, wherein the limit band corresponds to

$$\sqrt{\frac{3}{2}}$$

times the previous estimation value of maximum Doppler frequency.

9. The apparatus as claimed in one of claims 6 to 8, wherein the maximum Doppler frequency estimation unit uses at least one of a zero-crossing-rate, ZCR, a level-crossing-rate, LCR, an auto-correlation function, ACF, and a covariance, COV, of a received signal, for estimating the maximum Doppler frequency.

10. A velocity estimation method for a communication system including a transmitter for transmitting at least one signal through at least one wireless channel and a receiver for receiving the at least one signal and restoring data, the method comprising the steps of:

   detecting a pilot signal from a received signal;
   band-limit filtering the pilot signal;
   estimating a maximum Doppler frequency using the band-limit filtered pilot signal; and
   generating velocity information using the estimated maximum Doppler frequency.

11. A velocity estimation method for a mobile communication system including at least one base station for providing at least one mobile station within a service area with wireless access services, the method comprising the steps of:

down-converting a received wireless signal into a baseband signal;
outputting a digital signal by sampling a predetermined section of the baseband signal;
detecting a pilot signal from the digital signal;
band-limit filtering the pilot signal;
estimating a maximum Doppler frequency using the band-limit filtered pilot signal; and
converting the estimated maximum Doppler frequency into velocity information.

12. The method as claimed in claim 10 or 11, wherein a limit band for band-limit filtering is adaptively established based on a previously estimated maximum Doppler frequency.

13. The method as claimed in claim 10 or 11, wherein the limit band corresponds to

$$\sqrt{\frac{3}{2}}$$

times the previously estimated maximum Doppler frequency.

14. The method as claimed in claim 10 or 11, wherein the step for estimating a maximum Doppler frequency uses at least one of a zero-crossing-rate, ZCR, a level-crossing-rate, LCR, an auto-correlation function, ACF, and a covariance, COV, of a received signal, for estimating the maximum Doppler frequency.

FIG.1A

FIG.1B

EP 1 600 792 A2

201                        203                        205

WIRELESS          ┌──────────────┐      ┌──────────────┐      ┌──────────────────┐
CHANNEL    ──────▶│      RF      │─────▶│   SAMPLING   │─────▶│   DATA SIGNAL    │
                  │  PROCESSING  │      │     UNIT     │      │ PROCESSING UNIT  │
                  │     UNIT     │      │              │      │                  │
                  └──────────────┘      └──────────────┘      └──────────────────┘

                                                        212

       ┌──────────────┐  ┌──────────────┐  ┌──────────────────────┐  ┌──────────────────┐
       │    PILOT     │  │ ADAPTIVE TYPE│  │      MAXIMUM         │  │    VELOCITY      │
       │  DETECTION   │─▶│  BAND-LIMIT  │─▶│  DOPPLER FREQUENCY   │─▶│   INFORMATION    │──▶ VELOCITY
       │     UNIT     │  │    FILTER    │  │   ESTIMATING UNIT    │  │ GENERATING UNIT  │    INFORMATION
       └──────────────┘  └──────────────┘  └──────────────────────┘  └──────────────────┘

            207               209                  211                      213

# FIG.2

ADDITIONAL
NOISE COMPONENT

PSD

FADING SIGNAL
COMPONENT

$-B_m$  $-f_m$  $f_m$  $B_m$

# FIG.3A

PSD

ADDITIONAL
NOISE COMPONENT

FADING SIGNAL
COMPONENT

$-B_m$  $-\sqrt{3/2}\,f_m$  $-f_m$  $f_m$  $\sqrt{3/2}\,f_m$  $B_m$

# FIG.3B

FIG.4A

FIG.4B

FIG.4C

FIG.4D